# FASCICULE DE BREVET EUROPEEN

(11) **EP 2 911 873 B1**
(45) Date de publication et mention de la délivrance du brevet: **14.12.2016**
(21) Numéro de dépôt: 13801626.6
(22) Date de dépôt: 29.10.2013
(51) Int. Cl.: B32B 27/12, B32B 27/32, B64D 37/20, B64D 37/32, D04C 1/12, D04B 1/22, F16L 11/12, B32B 1/08, F16L 57/04, F16L 11/08

(54) **GAINE DE PROTECTION CONTRE LE FEU**
HÜLLE ZUM SCHUTZ GEGEN FEUER
SHEATH FOR PROTECTING AGAINST FIRE

(30) Priorité: 29.10.2012 FR 1260309
(43) Date de publication de la demande: 02.09.2015
(73) Titulaire: Tecalemit Aerospace, 69630 Chaponost (FR)
(72) Inventeur: COLCOMBET, Thierry, F-69450 Saint Cyr Au Mont D'or (FR)
(74) Mandataire: Delorme, Nicolas
(86) Numéro de dépôt international: PCT/FR2013/052592
(87) Numéro de publication internationale: WO 2014/068249

(56) Documents cités:
- WO-A1-99/67561
- WO-A1-2009/048470
- WO-A1-2011/120525
- US-A1- 2002 090 873
- US-A1- 2012 266 997

## Description

La présente invention concerne une gaine de protection contre le feu, un procédé de fabrication d'une tuyauterie composite souple comprenant cette gaine, et une tuyauterie composite, notamment une tuyauterie composite souple destinée au transport d'un fluide dans un aéronef, comprenant cette gaine.

Les tuyauteries utilisées pour des applications dans le domaine aéronautique doivent répondre à certaines exigences comme la tenue au feu pendant des laps de temps de sécurisation prédéterminées.

Des tuyauteries de transport composites sont par exemple connues de WO 2009/048470, US 2011 /290362, WO 99/67561, WO 2011 /120525, US2012/266997, US 2002/090873.

Par ailleurs, dans un contexte global de réduction de la consommation de carburant, l'exigence de réduction de la masse des aéronefs tend à devenir un impératif incontournable.

Il est connu de transporter des fluides dans un avion au moyen de tuyauteries souples, comprenant par exemple des tresses en inox pour résister à la pression à l'intérieur de la tuyauterie et une gaine de protection thermique, en silicone, destinée à protéger la tuyauterie lors d'un incendie en répondant aux exigences requises en la matière.

Cependant, ces tuyauteries et gaines de protection traditionnelles présentent une masse relativement importante, en raison du silicone utilisé comme matériau de protection contre le feu. Cela contribue à l'alourdissement des aéronefs qui en sont équipés. Ces tuyauteries et gaines de protection traditionnelles offrent donc une réponse limitée à la problématique de réduction de masse des aéronefs.

En outre, bien que le silicone apporte une protection thermique efficace contre le feu, le silicone apporte en revanche une réponse limitée à la protection contre les flammes.

Le silicone présente en effet l'inconvénient de devenir friable au contact d'une flamme, si bien que sous l'effet des vibrations dans un aéronef en vol, une gaine de protection en silicone soumis au contact prolongé des flammes peut se déliter, et exposer en conséquence aux flammes les couches d'un conduit sous-jacent à la gaine.

Les impératifs de sécurité, notamment de protection contre les incendies, et les impératifs économiques et environnementaux liés à la diminution de la consommation de carburant et donc à la réduction de la masse d'un aéronef, aboutissent donc actuellement à un conflit auquel les tuyauteries traditionnelles répondent souvent de façon incomplète dans la mesure où la réponse à certaines exigences est privilégiée par rapport à d'autres.

On connaît par ailleurs des documents de brevet US2011290362, WO9967561, WO2011120525 et US2012266997 des tuyauteries composites. Cependant, la plupart de ces tuyauteries sont destinées à des applications offshore, en immersion entre un puits sous-marin et une station de surface. En tout état de cause, aucune de ces tuyauteries ne concerne le domaine des tuyauteries composites à protection contre le feu.

Dans ce contexte technique, la présente invention vise à pallier tout ou partie de ces inconvénients en proposant une gaine de protection contre le feu offrant une solution satisfaisant à la fois les exigences de tenue au feu et de réduction de masse.

A cet effet, la présente invention a pour objet une gaine de protection, destinée à recouvrir une tuyauterie de transport d'un fluide, la gaine comprenant une couche ininflammable étanche aux flammes et une couche d'isolation thermique agencée sous la couche ininflammable, la couche ininflammable étant en carbone uniquement, et la couche d'isolation thermique comprenant un tricot, le tricot comprenant une pluralité de mailles et de l'air emprisonné dans la pluralité de mailles, la couche d'isolation thermique comprenant au moins 70 % d'air en volume, et dans lequel la couche ininflammable comprend des fibres de carbone présentant un taux de couverture de 100% en vue de protéger la couche d'isolation thermique d'un contact avec les flammes.

Ainsi, la gaine selon l'invention offre l'avantage de combiner une couche ininflammable légère étanche aux flammes et une couche légère d'isolation thermique.

La couche étanche aux flammes protège la couche d'isolation thermique d'un contact direct avec les flammes, si bien que cette couche d'isolation thermique ne se détériore pas, conserve son intégrité physique et ses propriétés d'isolation thermique.

L'étanchéité aux flammes est obtenue par le fait que le carbone conserve son état d'origine, ne se délite pas, au contact des flammes.

L'étanchéité aux flammes est également obtenue par le fait que la première couche est constituée uniquement de fibre de carbone, à l'exclusion de tout autre matériau qui se dégraderait au contact des flammes.

L'étanchéité aux flammes est enfin obtenue par un taux de couverture total en fibre de 100% des fibres de carbone, qui se traduit par une absence complète d'interstice pouvant laisser pénétrer les flammes au-travers des fibres de carbone.

Par couche présentant un taux de couverture de fibre de 100% on entend ainsi couche dénuée d'espace entre les assemblages de fibres.

En particulier, par couche ininflammable comprenant une tresse de fibres de carbone avec un taux de couverture de 100% on entend couche dénuée d'espace entre les assemblages de la tresse.

En d'autres termes, cela signifie que la couche est opaque et masque totalement la couche sous-jacente.

Cela rend la couche totalement étanche aux flammes. Les flammes ne peuvent pas la traverser.

Cela empêche donc l'inflammation de la couche de tricot située sous la couche ininflammable, ce qui permet à la couche de tricot d'assurer sa fonction de rempart thermique pendant une durée sensiblement plus longue que si elle était soumise au contact des flammes.

Cette synergie entre l'étanchéité aux flammes et l'isolation thermique par bulles d'air emprisonné dans un tricot apporte ainsi une tenue au feu sensiblement améliorée.

Cette amélioration est accompagnée en outre d'une réduction de masse importante, du fait de l'association de carbone et d'air pour remplir les fonctions respectives d'étanchéité aux flammes et de barrière thermique.

Par ailleurs, la construction des couches ininflammable et d'isolation thermique aménage des espaces d'air qui contribuent à la protection thermique.

Enfin, le carbone présente l'avantage d'être ininflammable, ce qui n'est pas le cas du silicone.

Selon un mode de réalisation préféré, la gaine comprend, par-dessus la couche ininflammable, une couche d'étanchéité anti-brûlot destinée à empêcher avant un incendie la pénétration de combustibles issus de l'environnement extérieur à travers la gaine.

Ainsi, la gaine est protégée contre un effet brûlot. L'effet brûlot peut survenir lorsque des combustibles issus de l'environnement extérieur, comme des graisses ou des huiles, après avoir pu pénétrer à travers une gaine et, s'être ainsi accumulés dans des couches intérieures de la gaine, alimentent le feu et provoquent en conséquence une combustion rapide de ces couches intérieures lors d'un incendie.

On notera que cette couche d'étanchéité anti-brûlot correspond à un film ou vernis consumable. Ce film ou vernis disparaît au contact du feu pour laisser la couche ininflammable travailler. Cependant, avant le déclenchement de l'incendie, ce film ou vernis étanche aura permis d'empêcher des combustibles de l'environnement extérieur de pénétrer dans la couche de tricot et d'y provoquer un effet brûlot, ce qui augmente la durée pendant laquelle la gaine peut protéger une tuyauterie contre le feu.

Avantageusement, la couche d'étanchéité anti-brûlot comprend un fluoropolymère.

Selon un mode de réalisation préféré, la couche d'étanchéité anti-brûlot est en polytétrafluoroéthylène (PTFE).

Le PTFE présente l'avantage, outre son étanchéité aux combustibles pouvant être issus de l'environnement extérieur du type graisses et huiles, de ralentir la propagation de la chaleur aux couches sous-jacentes.

Alternativement, la couche d'étanchéité anti-brûlot peut être en polyfluorure de vinylidène (PVDF), ou en perfluoroalkoxy (PFA), ou en éthylène-propylène fluoré (FEP).

De préférence, le tricot correspond à un tricot de fibre de verre.

Cette caractéristique offre l'avantage de combiner une masse faible et une isolation thermique efficace, en accord avec la combinaison d'air et de carbone.

Le tricot peut alternativement correspondre à un tricot de fibre de basalte, à un tricot de fibre de mica, à un tricot de fibre de métal comme du titane, ou encore à un tricot de fibre de céramique.

Avantageusement, la couche ininflammable correspond à une tresse de fibre de carbone.

La tresse offre avantageusement la possibilité de maîtriser efficacement le volume d'air dans la couche d'isolation thermique sous-jacente, en évitant de la compresser. Le tressage de la couche ininflammable améliore ainsi les performances d'isolation thermique de la gaine.

De préférence, la couche d'isolation thermique est constituée de deux couches de tricot superposées.

Cette caractéristique offre l'avantage d'augmenter la quantité d'air présente dans la couche d'isolation thermique. Cela permet d'augmenter l'isolation thermique offerte par la gaine.

Selon un autre aspect, l'invention a pour objet un procédé de fabrication d'une tuyauterie comprenant une couche supérieure, le procédé comprenant une étape de dépôt, sur la couche supérieure de la tuyauterie, d'une gaine de protection ayant les caractéristiques précitées.

Ce procédé permet avantageusement de protéger efficacement une tuyauterie contre le feu, sans l'alourdir.

De manière avantageuse, l'étape de dépôt de la gaine sur la couche supérieure comprend une étape de tricotage de la couche d'isolation thermique sur la couche supérieure de la tuyauterie pour obtenir une couche d'isolation thermique d'un diamètre extérieur tel que la couche d'isolation thermique comprend 70% d'air en volume, et une étape de dépôt de la couche ininflammable en carbone uniquement et de diamètre intérieur sensiblement égal au diamètre extérieur de la couche d'isolation thermique.

Ainsi, la couche d'isolation thermique n'est pas comprimée par la couche ininflammable.

Cela permet de capturer un maximum d'air dans le tricot, donc d'améliorer l'isolation thermique sans augmentation de masse significative.

L'étape de dépôt de la couche ininflammable en carbone peut être réalisée par croisement de fibres de carbone, notamment par tressage, spiralage, enroulement filamentaire, guipage, rubannage, tricotage, tissage plat ou tissage circulaire de fibres de carbone.

De préférence, l'étape de dépôt de la couche ininflammable en carbone correspond à un tressage de fibres de carbone.

La tresse permet avantageusement de maîtriser le volume d'air emprisonné, car elle ne le comprime pas.

L'invention concerne aussi une tuyauterie comprenant une gaine ayant les caractéristiques précitées.

Selon un autre aspect, l'invention a également pour objet une tuyauterie composite destinée au transport d'un fluide dans un aéronef, comprenant une couche tubulaire intérieure formant barrière chimique dans laquelle est destiné à s'écouler un fluide, notamment un fluide de lubrification ou de carburant, la couche tubulaire intérieure étant recouverte d'au moins une couche de renfort destinée à résister à la pression à l'intérieur de la tuyauterie, caractérisée en ce que ladite au moins une couche de renfort est recouverte d'au moins une couche de tenue au feu, en carbone, destinée à la protection de la tuyauterie contre un incendie. Cette tuyauterie peut comprendre avantageusement une gaine de protection ayant les caractéristiques précitées et ladite couche en carbone correspond à la couche ininflammable.

Ainsi, la tuyauterie selon l'invention permet de concilier les exigences de tenue au feu et réduction de masse, par l'utilisation d'une couche en carbone, ininflammable, très légère et très résistante au feu.

Par tenue au feu, ou stabilité au feu, on entend (outre une éventuelle fonction d'isolation thermique) la conservation des propriétés mécaniques.

Appliquée à la tuyauterie, la tenue au feu permet la conservation des fonctions de cette tuyauterie, en particulier les fonctions de transport du ou des fluides.

La terminologie de tenue au feu exprime la capacité des produits à satisfaire les classes de « résistance au feu » (classe désignant les éléments, équipements et structures capables de tenir pendant cinq minutes à la chaleur engendrée par une flamme normalisée) et « à l'épreuve du feu » (classe désignant les éléments, équipements et structures capables de tenir pendant quinze minutes à la chaleur engendrée par une flamme normalisée) selon les termes de la norme ISO 2685.

La couche en carbone présente l'avantage de conserver l'intégralité structurelle de la tuyauterie en cas de feu. Elle assure une fonction pare-feu durable. Cette tenue du carbone au feu constitue un avantage par rapport aux gaines des tuyauteries traditionnelles, notamment en silicone, qui, lors d'un incendie, peuvent craqueler sous l'effet de vibrations et se désagréger, exposant alors les couches inférieures au feu.

A masse équivalente, la tuyauterie selon l'invention offre une meilleure tenue au feu que celle d'une tuyauterie traditionnelle. A tenue au feu équivalente, la tuyauterie selon l'invention offre l'avantage d'une masse plus faible que celle d'une tuyauterie traditionnelle.

Selon un mode de réalisation, ladite au moins une couche en carbone est réalisée par croisement de fibres de carbone, notamment par tressage, spiralage, enroulement filamentaire, guipage, rubannage, tricotage, tissage plat ou tissage circulaire de fibres de carbone.

Selon une forme d'exécution, ladite au moins une couche de renfort destinée à résister à la pression à l'intérieur de la tuyauterie est en matériau aramide.

Cela présente l'avantage de la légèreté, tout en assurant une bonne tenue mécanique de la tuyauterie composite et une bonne résistance à l'éclatement.

Il pourrait être envisagé de réaliser la ou les couches de renfort avec un matériau métallique, comme des fibres de titane ou de l'inox.

De manière avantageuse, ladite au moins une couche de renfort est réalisée par croisement de fibres aramides, notamment par tressage, spiralage, enroulement filamentaire, guipage, rubannage, tricotage, tissage plat ou tissage circulaire de fibres aramides.

Selon une possibilité, ladite au moins une couche de renfort en matériau aramide est en Kevlar®.

De manière avantageuse, la tuyauterie comprend deux couches de renfort superposées l'une à l'autre.

Selon un mode de réalisation, la tuyauterie comprend au moins une couche en matériau réfractaire, thermiquement isolante, interposée entre ladite au moins une couche de renfort et ladite au moins une couche de carbone.

La ou les couches en matériau réfractaire permettent d'augmenter davantage encore la tenue au feu de la tuyauterie, en diminuant la transmission de chaleur aux couches subalternes.

La couche en matériau réfractaire peut correspondre à la couche d'isolation thermique de la gaine selon l'invention.

Selon une forme d'exécution, ladite au moins une couche en matériau réfractaire comprend un matériau sélectionné parmi la fibre de verre, le basalte, le silicone ou le mica.

Ladite au moins une couche en matériau réfractaire peut être formée soit de fibre de verre seule, de basalte seul, de silicone seul ou de mica seul.

Ladite au moins une couche en matériau réfractaire peut être composite, par exemple formée par l'association de carbone avec l'un des matériaux sélectionnés parmi la fibre de verre, le basalte, le silicone, ou le mica (c'est-à-dire au moins carbone et fibre de verre, ou au moins carbone et basalte, ou au moins carbone et silicone, ou au moins carbone et mica).

Selon une possibilité de réalisation, la tuyauterie comprend une couche extérieure formant barrière étanche, recouvrant ladite au moins une couche de carbone.

La couche extérieure peut correspondre à la couche d'étanchéité anti-brûlot de la gaine selon l'invention.

La couche extérieure formant barrière étanche peut aussi former barrière mécanique pour protéger la ou les couches en carbone sous-jacentes.

De manière avantageuse, la couche extérieure formant barrière étanche est obtenue par extrusion, moulage, frittage, injection, formage ou enduction.

Par enduction on entend de façon générale tout procédé consistant à appliquer de façon continue une matière fluide pour recouvrir une surface de support. Cela inclut notamment la réalisation d'un vernis.

Selon un mode de réalisation, la couche extérieure formant barrière étanche comprend un fluoropolymère.

Avantageusement, la couche extérieure formant barrière étanche comprend un fluoropolymère sélectionné par exemple parmi le polytétrafluoroéthylène (PTFE), le polyfluorure de vinylidène (PVDF) ou le perfluoroalkoxy (PFA).

La couche extérieure formant barrière étanche peut comprendre de l'éthylène-propylène fluoré (FEP).

Selon une possibilité, la couche tubulaire intérieure formant barrière chimique est en polytétrafluoroéthylène (PTFE). Elle peut aussi comprendre du carbone.

Elle peut être convolutée ou lisse, simple couche ou bicouche.

L'invention concerne également un aéronef, notamment un avion, comprenant une tuyauterie ayant les caractéristiques précitées.

L'invention concerne également l'utilisation d'une enveloppe de tenue au feu, pour protéger du feu un objet contenu dans l'enveloppe, ladite enveloppe étant obtenue par croisement de fibres de carbone, notamment par tressage, spiralage, enroulement filamentaire, guipage, rubannage, tricotage, tissage plat ou tissage circulaire de fibres de carbone.

L'objet peut notamment correspondre à un tuyau, un câble, une pièce mécanique longitudinale, comme une pièce de révolution.

D'autres caractéristiques et avantages de la présente invention ressortiront clairement de la description ci-après d'un mode de réalisation, donné à titre d'exemple non limitatif, en référence aux dessins annexés dans lesquels :
- la figure 1 est une vue de côté montrant les couches successives d'une gaine équipant une tuyauterie, selon un mode de réalisation de l'invention,
- la figure 2 est une vue de côté montrant différentes couches d'une tuyauterie, dans le but d'illustrer des essais comparatifs,
- la figure 3 est une vue de côté montrant les couches successives d'une tuyauterie selon un mode de réalisation de l'invention.

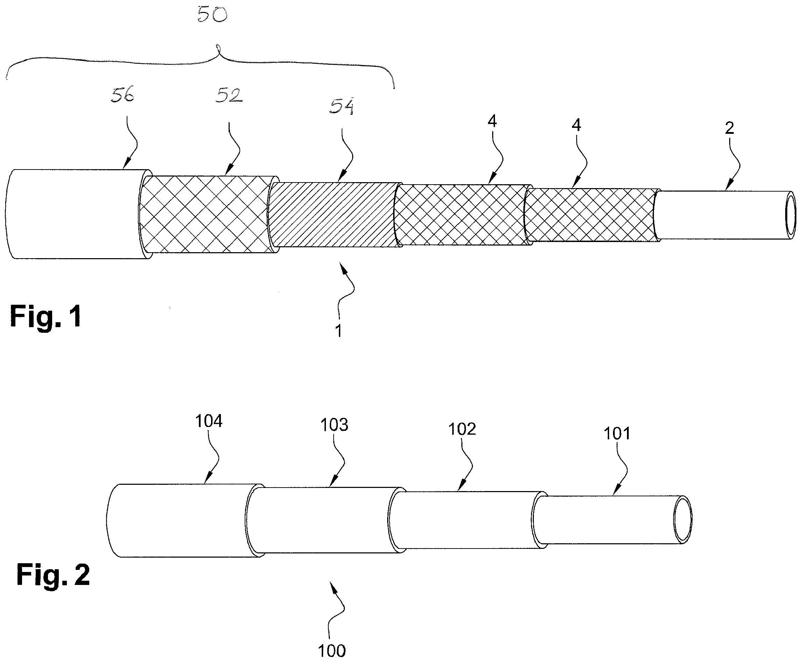

La figure 1 montre une tuyauterie 1 composite équipée d'une gaine 50 de protection selon un mode de réalisation de l'invention. Cette tuyauterie 1 peut correspondre plus particulièrement à une tuyauterie composite, souple, destinée au transport d'un fluide, comme un fluide de lubrification ou de carburant, dans un aéronef, notamment pour un moteur d'aéronef.

La gaine 50 comprend une couche ininflammable 52.

La couche ininflammable 52 est étanche aux flammes. Elle est uniquement en carbone.

La gaine 50 comprend aussi une couche d'isolation thermique 54, agencée sous la couche ininflammable 52.

La couche d'isolation thermique 54 correspond à un tricot.

Le tricot comprend une pluralité de mailles et de l'air emprisonné dans la pluralité de mailles, de sorte que la couche d'isolation thermique 54 comprend au moins 70 % d'air en volume.

Le volume d'air dans le tricot est mesuré par calcul de la section de la couche de tricot sur la base de la différence entre le diamètre extérieur et le diamètre intérieur, puis par pesée du tricot, et enfin, connaissant la masse volumique propre au matériau dans lequel est fait la couche de tricot, par calcul de la densité apparente, ce qui permet d'en déduire le volume d'air.

Selon l'invention, la couche ininflammable 52 comprend des fibres de carbone présentant un taux de couverture de 100% pour protéger intégralement la couche d'isolation thermique 54 d'un contact direct avec les flammes. Ainsi, les flammes ne peuvent pas traverser la couche ininflammable 52.

La combinaison carbone-air et taux de couverture de 100%-volume d'air de 70% selon l'invention permet de réaliser une gaine légère bi-fonctionnelle bi-couche étanchéité aux flammes-isolation thermique offrant une protection contre le feu sensiblement améliorée.

De préférence, la couche d'isolation thermique 54 correspond à un tricot de fibre de verre qui offre l'avantage de la légèreté et qui contribue à l'isolation thermique. Elle peut alternativement correspondre à un tricot de fibre de basalte, ou de fibre de mica, ou de fibre de métal comme du titane, ou encore à un tricot de fibre de céramique.

La couche d'isolation thermique 54 peut être constituée de deux couches de tricot superposées.

La couche ininflammable 52 peut avantageusement comprendre une tresse de fibre de carbone.

Comme on peut le voir sur la figure 1, la gaine 50 comprend avantageusement, par-dessus la couche ininflammable 52, une couche d'étanchéité anti-brûlot 56.

La couche d'étanchéité anti-brûlot 56 est destinée à empêcher, avant un incendie, la pénétration de combustibles issus de l'environnement extérieur à travers la gaine 50.

Cette couche d'étanchéité anti-brûlot 56 est en effet étanche à des combustibles issus de l'environnement extérieur, comme des graisses ou des huiles.

On notera que la couche d'étanchéité anti-brûlot 56 peut avantageusement comprendre un fluoropolymère. De préférence, la couche d'étanchéité anti-brûlot 56 est en polytétrafluoroéthylène (PTFE). Elle peut également être en polyfluorure de vinylidène (PVDF), en perfluoroalkoxy (PFA), ou en éthylène-propylène fluoré (FEP).

Plus l'épaisseur de la couche ininflammable 52 et de la couche d'isolation thermique 54 sont grandes, plus la gaine 50 résiste longtemps à un incendie. Toutefois, selon une possibilité, l'épaisseur de la couche ininflammable 52 peut être de l'ordre de 1 mm et l'épaisseur de la couche d'isolation thermique 54 peut être de l'ordre de 1 mm, ce qui permet de rendre la gaine 50 plus légère sans préjudice des performances de barrière aux flammes et d'isolation thermique.

A titre d'exemple, le titrage de la fibre formant le tricot est de l'ordre de 60 à 80 décitex, et le titrage de la fibre de carbone formant la couche ininflammable est de l'ordre de 1200 tex.

Le procédé de fabrication de la tuyauterie 1 est décrit ci-après. Il comprend une étape de dépôt de la gaine 50 de protection sur une couche 4 supérieure de la tuyauterie 1, cette couche 4 pouvant correspondre à une couche de renfort par exemple en matériau aramide.

L'étape de dépôt de la gaine 50 sur la couche 4 supérieure comprend une étape de tricotage de la couche d'isolation thermique 54 sur la couche 4 supérieure de la tuyauterie 1 pour obtenir une couche d'isolation thermique 54 d'un diamètre extérieur tel que la couche d'isolation thermique 54 comprend 70% d'air en volume, et une étape de dépôt de la couche ininflammable 52 constituée de carbone uniquement et présentant un diamètre intérieur sensiblement égal au diamètre extérieur de la couche d'isolation thermique 54, pour ne pas comprimer l'air contenu dans le tricot.

L'étape de dépôt de la couche ininflammable 52 en carbone est avantageusement réalisée par croisement de fibres de carbone, notamment par tressage, spiralage, enroulement filamentaire, guipage, rubannage, tricotage, tissage plat ou tissage circulaire de fibres de carbone.

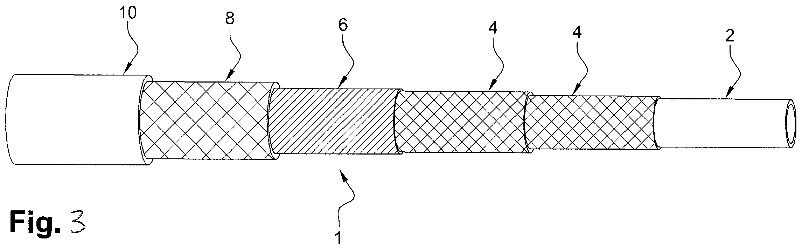

La tuyauterie 1 composite souple de la figure 3 comprend ici une couche 2 tubulaire intérieure formant barrière chimique, une ou plusieurs couches 4 de renfort, par exemple en tresses de matériau aramide, recouvrant la couche 2 tubulaire intérieure, éventuellement une ou plusieurs couches 6 en matériau réfractaire recouvrant la ou les couches 4 de renfort, au moins une couche 8 de tenue au feu, en carbone, recouvrant le cas échéant la ou les couches 6 en matériau réfractaire ou la ou les couches 4 de renfort, et par exemple une couche 10 extérieure formant barrière étanche recouvrant la ou les couches 8 de tenue au feu, en carbone.

La couche 2 tubulaire intérieure formant barrière chimique est destinée à l'écoulement d'un fluide, comme un fluide de lubrification ou de carburant. Cette couche 2 tubulaire intérieure peut correspondre à un conduit souple convoluté ou lisse, simple ou bicouche, en fluoré, ou à tout conduit adapté présentant les barrières chimiques et les compatibilités requises pour l'écoulement d'un fluide de lubrification ou de carburant. A titre d'exemple, la couche 2 tubulaire intérieure peut être en polytétrafluoroéthylène (PTFE). Elle peut comprendre du carbone servant à la conductivité électrique, pour répondre aux problèmes d'électricité statique.

La ou les couches 4 de renfort, au nombre de deux selon l'exemple de la figure 3, assurent la tenue et la structure mécanique de la tuyauterie 1. Ces couches 4 de renfort, ici en tresses de matériau aramide, sont adaptées pour résister à la pression dans la tuyauterie 1. Elles peuvent être par exemple en Kevlar®. Elles peuvent être réalisées par toute technique de croisement de fil, notamment par tressage, spiralage, enroulement filamentaire, guipage, rubannage, tricotage, tissage plat ou tissage circulaire de fibres aramides.

Toujours selon l'exemple de la figure 3, la tuyauterie 1 comprend ici une seule couche 6 en matériau réfractaire, résistant à des températures élevées, pour protéger la tuyauterie 1 contre le feu. La couche 6 est par exemple en fibre de verre. Elle peut être en basalte, mica ou silicone. La couche 6 peut aussi être composée de fibre de verre et de basalte, de fibre de verre et de mica, ou de fibre de verre et de silicone.

La couche 8 est destinée à assurer la tenue au feu de la tuyauterie 1. Cette couche 8 est en carbone. Ainsi, elle permet de conserver l'intégralité structurelle de la tuyauterie 1 en cas de feu. Elle peut être réalisée par toute technique de croisement de fil, notamment par tressage, spiralage, enroulement filamentaire, guipage, rubannage, tricotage, tissage plat ou tissage circulaire de fibres de carbone.

Il peut s'agir de fibres de carbone de tous modules, notamment de haut module, de module standard ou de module intermédiaire.

La couche 10 formant barrière étanche est rapportée en surface de la (ou des) couche 8 de stabilité au feu, en carbone, sous-jacente(s). Cette couche 10 est destinée à imperméabiliser la tuyauterie 1. La couche 10 peut être obtenue par toute méthode de polymérisation de matière résistante aux liquides et hydrocarbures. La couche 10 peut être obtenue par extrusion, moulage, enduction, injection, formage ou frittage. A titre d'exemple, elle peut être constituée de fluorés PTFE, PVDF ou PFA.

La couche 10 formant barrière étanche peut comprendre de l'éthylène-propylène fluoré (FEP).

La gaine 50 décrite précédemment peut faire partie intégrante de la tuyauterie 1. Le cas échéant, la couche 6 peut correspondre à la couche d'isolation thermique 54, la couche 8 en carbone peut correspondre à la couche ininflammable 52, et la couche 10 extérieure peut correspondre à la couche d'étanchéité anti-brûlot 56. Le cas échéant, la couche 6, la couche 8 et la couche 10 comprennent tout ou partie des caractéristiques décrites précédemment respectivement de la couche d'isolation thermique 54, de la couche ininflammable 52 et de la couche d'étanchéité anti-brûlot 56.

La tuyauterie 1 est destinée à une application dans l'aéronautique. A ce titre, l'invention concerne également un aéronef, comme un avion, comprenant la tuyauterie 1.

La tuyauterie 1 permet de répondre avec satisfaction, et même au-delà, des exigences de la norme aéronautique ISO 2685.

Des essais ont été menés. Ces essais consistent à appliquer la flamme normalisée définie par la norme ISO2685 pour tester la résistance au feu.

Ainsi, durant la durée d'exposition à la flamme normalisée suivant la norme ISO 2685, des échantillons sont exposés aux contraintes suivantes : circulation d'un fluide hydraulique ayant une température du fluide supérieure à 93°C, une pression du fluide de 10 bars et un débit de fluide de 4 L/min, et exposé à une vibration de 33 Hz avec une amplitude de 1,6 mm. Les échantillons sont exposés à la flamme normalisée jusqu'à la rupture de l'éprouvette. La durée des essais a été fixée à 30 minutes maximum, correspondant à deux fois la durée maximum fixée par la norme ISO 2685, pour cette démonstration.

En référence à la figure 2, les échantillons soumis aux essais sont des tuyaux 100 souples présentant les configurations suivantes :

| Référence | Composition |
|---|---|
| Configuration 1 | 101 = PTFE |
| | 102 = Aramide |
| | 103 = Verre |
| Configuration 2 | 101 = PTFE |
| | 102 = Aramide |
| | 104 = Carbone |
| Configuration 3 | 101 = PTFE |
| | 102 = Aramide |
| | 103 = Verre |
| | 104 = Carbone |

Les couches 101 et 102 sont identiques en dimensions et caractéristiques dans les trois cas de configuration. La couche 104 est inférieure en poids à la couche 103. Les couches 103 de la configuration 1 et de la configuration 3 sont les mêmes en dimensions et caractéristiques.

Les résultats suivants sont obtenus :

| | | Référence des échantillons et résultats comparatifs | | |
|---|---|---|---|---|
| Conditions d'essais | Exigences | Configuration 1 | Configuration 2 | Configuration 3 |
| Longueur de l'échantillon | >600mm | >600mm | >600mm | >600mm |
| Température huile entrée | >93°C | >93°C | >93°C | >93°C |
| Température flamme | >1020°C | >1020°C | >1020°C | >1020°C |
| Densité de flux thermique du brûleur | >106kW/m² | >106kW/m² | >106kW/m² | >106kW/m² |
| Débit | 4 I/min | 4 l/min | 4 I/min | 4 I/min |
| Pression | 10 bars | 10 bars | 10 bars | 10 bars |
| Distance entre la surface du brûleur et la surface de l'échantillon | 75mm ±10% | 75mm | 75mm | 75mm |
| Durée de l'essai | 30 minutes | Rupture à 8 min 25s | Rupture à 19 min 6s | 30 min (arrêt de l'essai sans rupture) |

Ces tests montrent que, à diamètre identique, une tuyauterie (configuration 1) comprenant une couche 101 intérieure en PTFE, une couche 102 en matériau aramide recouverte par une couche 103 de tresse de fibres de verre résiste pendant huit minutes au feu, tandis que lorsqu'on remplace la couche 103 en fibre de verre par une couche 104, plus légère, en carbone, la tuyauterie (configuration 2) résiste au moins dix-neuf minutes au feu. Par ailleurs, lorsqu'en plus d'une couche 103 en fibre de verre, on ajoute une couche 104 en carbone (configuration 3), la tuyauterie tient plus de trente minutes (test arrêté au bout de trente minutes).

On comprendra que les résultats obtenus en termes de tenue au feu par l'utilisation d'une couche en carbone vont au-delà des résultats escomptés.

Ces résultats sont d'autant plus intéressants que l'utilisation d'une couche de carbone permet simultanément d'atteindre une réduction de masse du tuyau de l'ordre de 30% à 50%, notamment par rapport à des tuyaux traditionnels souples comprenant des couches en inox et silicone, pour des dimensionnels de tubes intérieurs identiques et des exigences de performances en utilisation identiques.

Ce gain en masse est significatif dans un avion équipé de tuyauteries 1 selon l'invention, compte-tenu du nombre important de tuyauteries pouvant équiper un tel avion.

L'utilisation d'une enveloppe de tenue au feu obtenue par croisement de fibres de carbone, notamment par tressage, spiralage, enroulement filamentaire, guipage, rubannage, tricotage, tissage plat ou tissage circulaire de fibres de carbone, permet de protéger du feu un objet contenu dans l'enveloppe, notamment un tuyau, un câble, une pièce mécanique longitudinale, comme une pièce de révolution.

Bien entendu, l'invention n'est nullement limitée au mode de réalisation décrit ci-dessus, ce mode de réalisation ayant été donné à titre d'exemple.

Ainsi, la tuyauterie 1 peut comprendre une unique couche 4 de renfort.

Par ailleurs, la tuyauterie 1 pourrait comprendre plus d'une couche 6 en matériau réfractaire.

## Revendications

1. Gaine (50) de protection, destinée à recouvrir une tuyauterie (1) de transport d'un fluide, la gaine (50) comprenant une couche ininflammable (52) étanche aux flammes et une couche d'isolation thermique (54) agencée sous la couche ininflammable (52), la couche ininflammable (52) étant en carbone uniquement, et la couche d'isolation thermique (54) comprenant un tricot, le tricot comprenant une pluralité de mailles et de l'air emprisonné dans la pluralité de mailles, **caractérisée en ce que** la couche d'isolation thermique (54) comprenant au moins 70% d'air en volume, et dans lequel la couche ininflammable (52) comprend des fibres de carbone présentant un taux de couverture de 100% en vue de protéger la couche d'isolation thermique (54) d'un contact avec les flammes.

2. Gaine (50) selon la revendication 1, **caractérisée en ce que** la gaine (50) comprend, par-dessus la couche ininflammable (52), une couche d'étanchéité anti-brûlot (56) destinée à empêcher avant un incendie la pénétration de combustibles issus de l'environnement extérieur à travers la gaine (50).

3. Gaine (50) selon la revendication 2, **caractérisée en ce que** la couche d'étanchéité anti-brûlot (56) comprend un fluoropolymère.

4. Gaine (50) selon la revendication 3, **caractérisée en ce que** la couche d'étanchéité anti-brûlot (56) est en polytétrafluoroéthylène (PTFE).

5. Gaine (50) selon l'une des revendications 1 à 4, **caractérisée en ce que** le tricot correspond à un tricot de fibre de verre.

6. Gaine (50) selon l'une des revendications 1 à 5, **caractérisée en ce que** la couche ininflammable (52) correspond à une tresse de fibre de carbone.

7. Gaine (50) selon l'une des revendications 1 à 6, **caractérisée en ce que** la couche d'isolation thermique (54) est constituée de deux couches de tricot superposées.

8. Procédé de fabrication d'une tuyauterie (1) comprenant une couche supérieure, le procédé comprenant une étape de dépôt, sur la couche supérieure de la tuyauterie (1), d'une gaine (50) de protection selon l'une des revendications 1 à 7.

9. Procédé selon la revendication 8, **caractérisé en ce que** l'étape de dépôt de la gaine (50) sur la couche supérieure comprend une étape de tricotage de la couche d'isolation thermique (54) sur la couche supérieure de la tuyauterie (1) pour obtenir une couche d'isolation thermique (54) d'un diamètre extérieur tel que la couche d'isolation thermique (54) comprend 70% d'air en volume, et une étape de dépôt de la couche ininflammable (52) en carbone uniquement et de diamètre intérieur sensiblement égal au diamètre extérieur de la couche d'isolation thermique (54).

10. Procédé selon la revendication 8 ou 9, **caractérisé en ce que** l'étape de dépôt de la couche ininflammable (52) en carbone correspond à un tressage de fibres de carbone.

11. Tuyauterie (1) composite destinée au transport d'un fluide dans un aéronef, comprenant une couche (2) tubulaire intérieure formant barrière chimique dans laquelle est destiné à s'écouler un fluide, notamment un fluide de lubrification ou de carburant, la couche (2) tubulaire intérieure étant recouverte d'au moins une couche (4) de renfort destinée à résister à la pression à l'intérieur de la tuyauterie (1), **caractérisée en ce que** ladite au moins une couche (4) de renfort est recouverte d'au moins une couche (8) de tenue au feu, en carbone, destinée à la protection de la tuyauterie (1) contre un incendie, la tuyauterie (1) comprenant une gaine (50) de protection selon l'une des revendications 1 à 7 et ladite couche (8) en carbone correspondant à la couche ininflammable (52).

12. Tuyauterie (1) selon la revendication 11, **caractérisée en ce que** la couche (2) tubulaire intérieure formant barrière chimique est en polytétrafluoroéthylène (PTFE).

13. Aéronef, notamment avion, comprenant une tuyauterie (1) selon la revendication 11 ou 12.

## Patentansprüche

1. Schutzhülle (50), die dazu bestimmt ist, eine Rohrleitung (1) für den Transport einer Flüssigkeit zu überziehen, wobei die Hülle (50) eine nicht entzündliche, flammendichte Schicht (52) umfasst, sowie eine thermische Isolierschicht (54), die unter der nicht entzündlichen Schicht (52) angeordnet ist, wobei die nicht entzündliche Schicht (52) nur aus Kohlenstoff ist, und die thermische Isolierschicht (54) einen Strickstoff umfasst, wobei der Strickstoff eine Vielzahl von Maschen umfasst, sowie Luft, die in der Vielzahl von Maschen eingeschlossen ist, **dadurch gekennzeichnet, dass** die thermische Isolierschicht (54) zumindest 70 Vol.-% an Luft umfasst, und wobei die nicht entzündliche Schicht (52) Kohlenstofffasern umfasst, die einen Abdeckgrad von 100% aufweist, um die thermische Isolierschicht (54) vor einem Kontakt mit den Flammen zu schützen.

2. Hülle (50) nach Anspruch 1, **dadurch gekennzeichnet, dass** die Hülle (50) über der nicht entzündlichen Schicht (52) eine brandmitteldichte Schutzschicht (56) umfasst, die dazu bestimmt ist, vor einem Brand das Eindringen von Brennstoffen aus der äußeren Umgebung durch die Hülle (50) hindurch zu verhindern.

3. Hülle (50) nach Anspruch 2, **dadurch gekennzeichnet, dass** die brandmitteldichte Schutzschicht (56) ein Fluorpolymer umfasst.

4. Hülle (50) nach Anspruch 3, **dadurch gekennzeichnet, dass** die brandmitteldichte Schutzschicht (56) aus Polytetrafluorethylen (PTFE) ist.

5. Hülle (50) nach einem der Ansprüche 1 bis 4, **dadurch gekennzeichnet, dass** der Strickstoff einem Glasfaser-Strickstoff entspricht.

6. Hülle (50) nach einem der Ansprüche 1 bis 5, **dadurch gekennzeichnet, dass** die nicht entzündliche Schicht (52) einem Kohlenstofffasergeflecht entspricht.

7. Hülle (50) nach einem der Ansprüche 1 bis 6, **dadurch gekennzeichnet, dass** die thermische Isolierschicht (54) aus zwei übereinanderliegenden Strickstoffschichten gebildet wird.

8. Verfahren zur Herstellung einer Rohrleitung (1), eine Oberschicht umfassend, wobei das Verfahren einen Schritt zum Auftragen auf der Oberschicht der Rohrleitung (1) einer Schutzhülle (50) nach einem der Ansprüche 1 bis 7 umfasst.

9. Verfahren nach Anspruch 8, **dadurch gekennzeichnet, dass** der Schritt zum Auftragen der Schutzhülle (50) auf der Oberschicht einen Schritt zum Stricken der thermischen Isolierschicht (54) auf der Oberschicht der Rohrleitung (1) umfasst, um eine thermische Isolierschicht (54) mit einem solchen Außendurchmesser zu erhalten, dass die thermische Isolierschicht (54) 70 Vol.-% an Luft umfasst, sowie einen Schritt zum Auftragen der nicht entzündlichen Schicht (52) nur aus Kohlenstoff und mit einem Innendurchmesser, der in etwa gleich dem Außendurchmesser der thermischen Isolierschicht (54) ist.

10. Verfahren nach Anspruch 8 oder 9, **dadurch gekennzeichnet, dass** der Schritt zum Auftragen der nicht entzündlichen Schicht (52) aus Kohlenstoff einem Flechten von Kohlenstofffasern entspricht.

11. Verbundrohrleitung (1), die für den Transport einer Flüssigkeit in einem Luftfahrzeug bestimmt ist, eine röhrenförmige Innenschicht (2) umfassend, die eine chemische Barriere bildet, in der eine Flüssigkeit, vor allem eine Schmierflüssigkeit oder ein Kraftstoff, dazu bestimmt ist, hindurchzuströmen, wobei die röhrenförmige Innenschicht (2) von zumindest einer Verstärkungsschicht (4) überzogen ist, die dazu bestimmt ist, dem Druck im Inneren der Rohrleitung (1) standzuhalten, **dadurch gekennzeichnet, dass** die besagte zumindest eine Verstärkungsschicht (4) mit zumindest einer Feuerschutzschicht (8) aus Kohlenstoff überzogen ist, die zum Schutz der Rohrleitung (1) gegen einen Brand bestimmt ist, wobei die Rohrleitung (1) eine Schutzhülle (50) nach einem der Ansprüche 1 bis 7 umfasst, und die besagte Schicht (8) aus Kohlenstoff der nicht entzündlichen Schicht (52) entspricht.

12. Rohrleitung (1) nach Anspruch 11, **dadurch gekennzeichnet, dass** die röhrenförmige Innenschicht (2), die eine chemische Barriere bildet, aus Polytetrafluorethylen (PTFE) ist.

13. Luftfahrzeug, vor allem ein Flugzeug, eine Rohrleitung (1) nach Anspruch 11 oder 12 umfassend.

## Claims

1. A protective sheath (50), intended to cover a fluid transport piping (1), the sheath (50) comprising a non-flammable layer (52) which is flame resistant and a thermal insulation layer (54) arranged under the non-flammable layer (52), the non-flammable layer (52) being made of carbon only, and the thermal insulation layer (54) comprising a knit, the knit comprising a plurality of meshes and air trapped in the plurality of meshes, **characterized in that** the thermal insulation layer (54) comprising at least 70% of air by volume, and in which the non-flammable layer (52) comprises carbon fibers having a coverage rate of 100% in order to protect the thermal insulation layer (54) from a contact with the flames.

2. The sheath (50) according to claim 1, **characterized in that** the sheath (50) comprises, above the non-flammable layer (52), a fireproof sealing layer (56) intended to prevent, before a fire, the penetration of fuel coming from the outside environment through the sheath (50).

3. The sheath (50) according to claim 2, **characterized in that** the fireproof sealing layer (56) comprises a fluoropolymer.

4. The sheath (50) according to claim 3, **characterized in that** the fireproof sealing layer (56) is made of polytetrafluoroethylene (PTFE).

5. The sheath (50) according to any of claims 1 to 4, **characterized in that** the knit corresponds to a knitted fiberglass.

6. The sheath (50) according to any of claims 1 to 5, **characterized in that** the non-flammable layer (52) corresponds to a carbon fiber braid.

7. The sheath (50) according to any of claims 1 to 6, **characterized in that** the thermal insulation layer (54) consists of two superimposed knitted layers.

8. A method for manufacturing a piping (1) comprising an upper layer, the method comprising a step of depositing, on the upper layer of the piping (1), a protective sheath (50) according to any of claims 1 to 7.

9. The method according to claim 8, **characterized in that** the step of depositing the sheath (50) on the upper layer comprises a step of knitting the thermal insulation layer (54) on the upper layer of the piping (1) in order to obtain a thermal insulation layer (54) of an outer diameter such that the thermal insulation layer (54) comprises 70% of air by volume, and a step of depositing the non-flammable layer (52) made of carbon only and of an inner diameter substantially equal to the outer diameter of the thermal insulation layer (54).

10. The method according to claim 8 or 9, **characterized in that** the step of depositing the non-flammable layer (52) made of carbon corresponds to a carbon fiber braiding.

11. A composite piping (1) intended to transport a fluid in an aircraft, comprising an inner tubular layer (2) forming a chemical barrier in which a fluid is intended to flow, in particular a lubricating or fuel fluid, the inner tubular layer (2) being covered with at least one reinforcement layer (4) intended to resist the pressure inside the piping (1), **characterized in that** said at least one reinforcement layer (4) is covered with at least one fire-resistance layer (8), made of carbon, intended to protect the piping (1) from a fire, the piping (1) comprising a protective sheath (50) according to any of claims 1 to 7 and said layer (8) made of carbon corresponding to the non-flammable layer (52).

12. The piping (1) according to claim 11, **characterized in that** the inner tubular layer (2) forming a chemical barrier is made of polytetrafluoroethylene (PTFE).

13. An aircraft, in particular a plane, comprising a piping (1) according to claim 11 or 12.
